Europäisches Patentamt

European Patent Office

Office européen des brevets

(19)

(11) Veröffentlichungsnummer: **0 042 979**

**A1**

# (12) EUROPÄISCHE PATENTANMELDUNG

(21) Anmeldenummer: **81104117.7**

(22) Anmeldetag: **29.05.81**

(51) Int. Cl.³: **F 02 B 37/00**
**F 02 B 27/04**

(30) Priorität: **28.06.80 DE 3024534**

(43) Veröffentlichungstag der Anmeldung:
**06.01.82 Patentblatt 82/1**

(84) Benannte Vertragsstaaten:
**FR GB IT SE**

(71) Anmelder: **Vereinigte Flugtechnische Werke GmbH**
**Hünefeldstrasse 1-5**
**D-2800 Bremen(DE)**

(72) Erfinder: **Behnert, Reinhard, Dipl.-Ing.**
**Deisterstrasse 7**
**D-2800 Bremen 44(DE)**

(74) Vertreter: **Bischof, Hans-Jochen**
**Postfach 10 78 45 Industriestrasse 20**
**D-2800 Bremen 1(DE)**

(54) **Mehrkolbenbrennkraftmaschine mit einem Abgasturbolader.**

(57) Die Erfindung bezieht sich auf eine mit einem Abgasturbolader (11,12) versehene Mehrkolbenbrennkraftmaschine (10), dessen Brennkammern vom Verdichter (12) des Abgasturboladers (11,12) aufgeladen werden. Die Abgase der mit einem Abgasturbolader (11,12) versehene Brennkraftmaschine (10) sind in zwei von der Zündfolge abhängige Teilströme (1,3,5 und 2,4) aufgeteilt.

Der erste Teilstrom (1,3,5) ist der Turbine (11) des Abgasturboladers (11,12) zugeleitet.

Der zweite Teilstrom (2,4) ist einer hinter der Turbine (11) angeordneten Wirbelinjektorkammer (13) zugeführt und übt daher auf die über die Turbine (11) geleiteten Abgase eine Saugwirkung aus.

FIG. 2

8023-26                                      24. Juni 1980
                                             Sm/di


          Vereinigte Flugtechnische Werke

          Gesellschaft mit beschränkter Haftung
---------------------------------------------------------------


     Mehrkolbenbrennkraftmaschine mit einem Abgasturbolader


-----------------------------------------------------------------


Die Erfindung bezieht sich auf eine Mehrkolbenbrennkraftmaschine
mit einem Abgasturbolader, dessen Verdichter die einzelnen Brennkammern auflädt und dessen von den Abgasen beaufschlagte Turbine
ein Mischrohr aufweist.

Beim Einsatz eines Turboladers an einem Kolbenmotor insbesondere
einem Ottomotor, ist es notwendig, die fluktuierenden Gaszustände
in den Abgasleitungen zwischen Auslaßventil und Turbineneingang
zu beachten. Dort bildet sich bei den Abgasen bekanntlich eine
vom Zylinder-Druckverhältnis und der Öffnungsfläche des Ausgangsventils abhängige Strömung aus, deren statischer Druck, der sog.
Gegendruck vor der Turbine des Abgasturboladers, über der Zeit
einen wellenförmigen Verlauf mit einem Überdruck und einem Unterdruck gegenüber dem mittleren Ladedruck zeigt. Durch Anpassung der Phase und der Amplitude dieser Druckwelle,ist es möglich, die Leistungsaufnahme der Turbine eines Abgasturboladers sowie den Spülvorgang im Motorzylinder wesentlich zu verbessern. Dabei läßt sich eine optimale Wirkung dann erzielen, wenn die Unterdruckwelle am Anfang der Überschneidungszeit von Aus- und Einlaßventil einsetzt. Die Beträge der Überdruckamplitude und der Unterdruckamplitude bestimmen hierbei den Ausströmungsvorgang vom Zylinder in die Abgasleitung. Als Ziel wird dabei hoher Unterdruck und geringer Gegen- Überdruck hinter dem Auslaßventil angestrebt, um die Restgasmenge in den Brennkammern (Zylinder) zu verkleinern. Besonders bei Ottomotoren ist dies wichtig, da ein hoher Restgasanteil die Gefahr des Klopfens in sich birgt., dem normalerweise nur durch eine Verringerung des mit einer Wirkungsgradverschlechterung verbundenen Ladedrucks begegnet werden kann.

Unter Berücksichtigung dieser Zusammenhänge sind beim Anschluß eines Abgasturboladers zwei Verfahren und zwar die sog. Stau- Aufladung und die Stoß-Aufladung entstanden. Bei der Stau-Aufladung wird durch frühes Zusammenfassen der von den Zylindern kommenden Abgasleitungen ein Ausgleich der Druck-Fluktuationen erzielt, so daß sich hierbei ein geringer Turbinengegendruck, aber gleichzeitig ein geringer Unterdruck, ergibt. Dieses Ladeverfahren kann mit relativ einfach ausgebildeten Abgaskrümmern durchgeführt werden, aber bei Teillast des Motor-Turbolader-Systems zeigt dieses Verfahren ein schlechtes Beschleunigungsverhalten. Außerdem wird durch die praktisch nicht vorhandene Unterdruckswelle die Gefahr der Rückspülung von Heißgasen während der Ventilüberschneidung erhöht.

Bei der Stoß-Aufladung werden die Abgasleitungen der einzelnen Motorzylinder in Abhängigkeit der Zündfolge so zu Gruppen zusammengefaßt, daß sich die Druckwelle voll ausbilden kann.

Dieses Verfahren ist gegenüber der Stau-Aufladung günstiger,
aber es benötigt wesentlich komplizierte Abgasleitungen, um
die angestrebten Wirkungen zu erzielen.

Ausgehend von den beiden zuvor beschriebenen Ladeverfahren ist
in jüngster Zeit ein weiteres Ladeverfahren und zwar das sog.
Puls-Converter-Verfahren entstanden. Bei diesem Verfahren wird
vor der Turbine des Abgasturboladers ein Mischrohr angeordnet,
über das die entsprechend dem Zündzeitpunkt versetzter Zylinder
paarweise zusammengefaßten Abgasleitungen geleitet werden. Dieses
Verfahren verlangt zu seinem Betrieb eine einwandfreie Abstimmung
des gesamten Abgassystems mit Abgaskrümmer, Puls-Convertor-Teil
und Turbineneinlaß, um eine Rückspülung von Verbrennungsgas durch
benachbarte Abgaskanäle auszuschließen.

Der Erfindung liegt daher die Aufgabe zugrunde, ein Ladeverfahren
für eine mit einem Abgasturbolader versehene Mehrkolbenbrennkraftmaschine vorzusehen, bei der sich die Phase der Abgasströme einstellen bzw. anpassen läßt. Gemäß der Erfindung ist diese Aufgabe
dadurch gelöst, daß die Abgasmenge in zwei von den Brennkammern
und der Zündfolge abhängigen Teilströme aufgeteilt ist und das
ein Teilstrom derart als Treibstrom dem hinter der Turbine angeordneten und als Injektormischkammer ausgebildeten Mischrohr zugeführt ist, daß der über der Turbine entspannte andere Teilstrom
die ansaugbare sekundäre Gasmenge des Injektors bildet.

Hierdurch läßt sich eine Phasenverschiebung der Primär- und der
Sekundärströme erzielen, wodurch sich eine Möglickeit zur Einstellung der wellenförmigen Abgasströmung auf günstige Zeitpunkte
ergibt. Die erzielbare Phasenverschiebung zwischen dem Primär-
und Sekundärstrom in der Injektormischkammer, d.h. das induzierte
Druckverhältnis vor und hinter der Turbine ist abhängig von der
Größe der Injektormischkammer und der Vorkammer, vom Verhältnis der injizierten Menge zu der über die Turbine geleiteten Menge sowie dem Aufbau der Wirbelkomponenten in der Injektormischkammer und der Vorkammer. Da bei diesen Bauteilen Gestaltungsmöglichkeiten bestehen, ist es auch möglich, die Phasenlage der Abgasströmung zu beeinflussen. Außerdem sei hier noch erwähnt, daß ein Injektor grundsätzlich eine Phasenverschiebung von 180° im Druckverlauf bewirkt, da Geschwindigkeit und statischer Druck eine entgegengesetzte Phase haben.

Es ist dabei noch möglich, die Injektormischkammer als Wirbelinjektorkammer auszubilden und/oder den Injektor der Injektormischkammer so auszubilden bzw. anzuordnen, daß der Treibstrom eine die Phasenlage der Teilströme beeinflussende Drallkomponente erhält. Außerdem kann das Volumen der Injektormischkammer derart bemessen werden, daß sich durch den Füllvorgang eine die Phasenlage der Teilströme beeinflussende Wirkung erzielen läßt.

Von Vorteil ist dabei auch, daß sich durch die örtliche Druckabsenkung in der Injektormischkammer das gesamte Druckgefälle in der Turbine des Abgasturboladers erhöht, wodurch die Energie des umgeleiteten Abgases zum größten Teil in Nutzleistung umgesetzt werden kann. Der Entspannungsprozeß in der Turbine läuft dabei auf einem geringeren Druckniveau ab, was für den Betrieb der Abgasturbine ebenfalls von Vorteil ist. Durch geeignete Wahl der Größenverhältnisse der Injektormischkammer bzw. einer als Injektormischkammer eingesetzten Wirbelinjektorkammer lassen sich die Druck-Geschwindigkeitsverhältnisse vor und hinter der Turbine so in der Phase einstellen, daß ein Druckberg vor der Turbine mit einem Drucktal hinter der Turbine zusammenfällt. Außerdem kann die Phasenlage der Abgasteilströme noch durch das Verhältnis des Mischkammerquerschnittes zum Injektordüsenquerschnitt sowie durch die Mischkammerlänge und die Frequenz der pulsierenden Abgasteilströme beeinflußt werden. Bei variabler Phasenlage, die auf der zuvor beschriebenen Weise erzielt werden kann, ist es auch möglich, die Leistungsaufnahme der
Abgasturbine zu regeln.

Die Erfindung wird anhand der beiliegenden Zeichnung näher erläutert. Es zeigen:

      Fig. 1: ein Diagramm

      Fig. 2: das Prinzip eines Mehrkolbenmotors mit einem Abgasturbolader und einer Wirbel-

             injektorkammer   u n d

      Fig. 3: Diagramme.

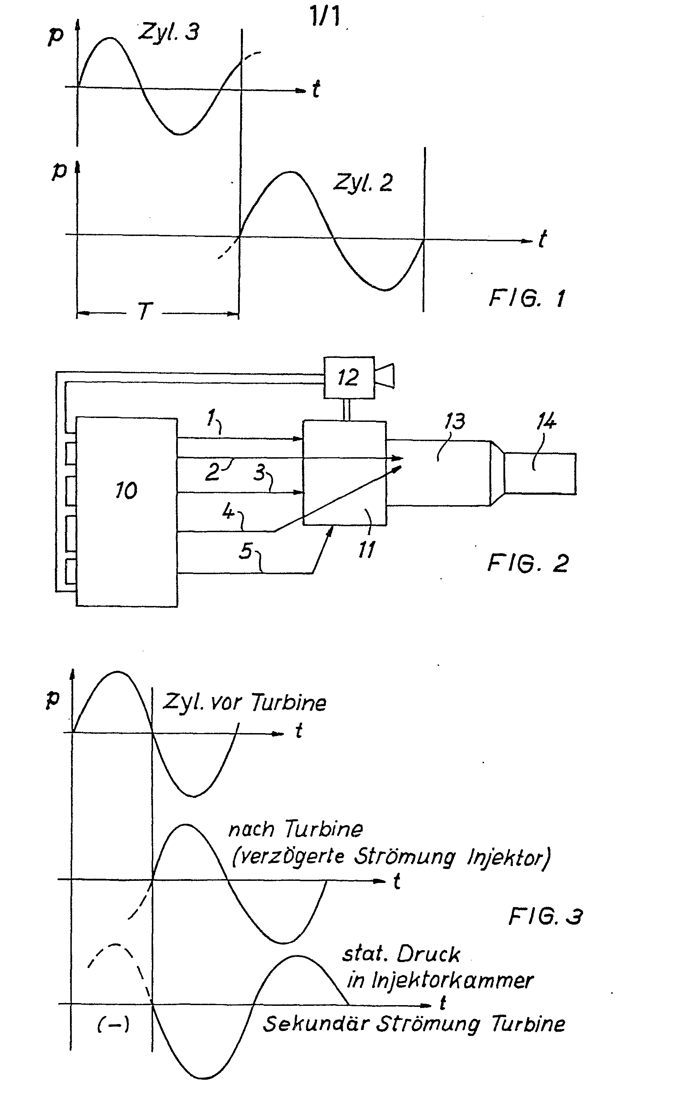

Wie aus Fig. 1 hervorgeht, haben die Abgasströme der Zylinder
eines Mehrkolbenmotors verschiedene Phasenlagen. Im dargestellten Diagramm nach Fig. 1 ist dabei der Verlauf der Abgasströme
der Zylinder 2 und 3 eines Fünfzylindermotors abgebildet. Auf
der Ordinate ist dabei der Druck p und auf der Abszisse die Zeit
t aufgetragen. Es ist aber auch möglich, anstatt des Druckes p
die Enthalpie auf der Ordinate aufzutragen. Fig. 2 zeigt dabei
das Prinzip eines Fünfzylindermotors 10, bei dem die Abgasleitungen der Zylinder 1, 3 und 5 einer Turbine 11 zugeleitet sind,
die mit einem Verdichter 12 einen Abgasturbolader bildet. Die
Abgasleitungen der Zylinder 2 und 4 sind einer hinter der Turbine
11 angeordneten Wirbelinjektorkammer 13 zugeführt, und üben daher auf die über die Turbine 11 geleiteten Abgase eine Saugwirkung aus. Anschließend gelangen die Abgase über ein Abgasrohr
14 ins Freie. Mit der Turbine 12 werden in bekannter Weise die
Zylinder des Motors 10 mit Frischluft aufgeladen.

Die Leitungsführung der Abgasrohre zur Bildung der zwei Teilströme kann auch umgekehrt, d.h. die Abgasrohre 2 und 4 können
mit der Turbine 11 verbunden werden und die Abgasleitungen 1, 3

- 6 -

und 5 mit der Wirbelinjektorkammer 13. Die jeweils günstigste Aufteilung ist dabei abhängig von der Anzahl der Motorzylinder. Es ist aber auch möglich, nur einen Teil der zur Verfügung stehenden Abgase in zwei Teilströme aufzuteilen, in dem z.B. die Abgase eines Zylinders in bekannter Weise zur Regelung der Abgasturbine abgeblasen werden. Bei gegebener Geometrie einer Injektormischkammer z.B. einer Wirbelinjektorkammer und einer davon abhängigen Basisphasenverschiebung kann die Phasenlage noch durch eine Mengenteilung der zugeführten Abgase über eine Veränderung der Injektordüsenfläche oder durch Erzeugung von Drallkomponenten in der Wirbelinjektorkammer oder einer Vorkammer weiter beeinflußt werden.

Im Diagramm nach Fig. 3 ist der Druckverlauf vom Zylinder 2 vor und hinter der Turbine 11 bzw. Wirbelinjektorkammer 13 des Fünfzylindermotors nach Fig. 2 über der Zeit abgebildet, woraus man eine Phasenverschiebung von $180^o$ zwischen diesen beiden Druckverläufen erkennen kann. Außerdem ist der statische Druck in der Injektorkammer 13 und zwar der durch die Turbine 11 geleiteten Saugströmung darunter abgebildet.

Das erfindungsgemäße Ladeverfahren zeichnet sich durch eine bessere Spülung und bessere Verbrennungsverhältnisse im Motor aus. Dabei kann durch eine Anpassung und Verstärkung der Unterdruckphase vor der Turbine die Spülung noch weiter verbessert werden. Vorteilhaft ist auch, daß für die Abgaskanäle einfache Leitungen eingesetzt werden können und die Möglichkeit der Regelung durch Phasenverschiebung der Strömungsgrößen vor und hinter der Turbine. Schließlich bietet eine einfache Anpassung des Turbinengehäuses (Querschnitt) eine weitere Möglichkeit, die Phasenbeziehungen der Teilströme zu beeinflussen.

- 1 -

8023-26                                    Bremen, 24. Juni 1980
                                           Sm/di


            Vereinigte Flugtechnische Werke
            Gesellschaft mit beschränkter Haftung
------------------------------------------------------------------


            P a t e n t a n s p r ü c h e

------------------------------------------------------------------


1.) Mehrkolbenbrennkraftmaschine mit einem Abgasturbolader, dessen
    Verdichter die einzelnen Brennkammern auflädt und dessen von
    den Abgasen beaufschlagte Turbine ein Mischrohr aufweist, da-
    durch  g e k e n n z e i c h n e t , daß die Abgasmenge in
    zwei von den Brennkammern und der Zündfolge abhängige Teilströme aufgeteilt ist, und daß ein Teilstrom derart als Treibstrom dem hinter der Turbine (11) angeordneten und als Injektormischkammer (13) ausgebildeten Mischrohr zugeführt ist,
    daß der über der Turbine (11) entspannte andere Teilstrom
    die ansaugbare sekundäre Gasmenge des Injektors bildet.


2.) Mehrkolbenbrennkraftmaschine nach Anspruch 1, dadurch  g e -
    k e n n z e i c h n e t , daß die Injektormischkammer als
    Wirbelinjektorkammer (13) ausgebildet ist.

                                                      - 2 -

3.) Mehrkolbenbrennkraftmaschine nach Anspruch 1 oder 2, dadurch  g e k e n n z e i c h n e t , daß der Injektor der Injektormischkammer derart ausgebildet bzw. angeordnet ist, daß der Treibstrom eine die Phasenlage der Teilströme beeinflussende Drallkomponente erhält.

4.) Mehrkolbenbrennkraftmaschine nach einem der Ansprüche 1 bis 3 dadurch  g e k e n n z e i c h n e t , daß das Volumen der Injektormischkammer derart bemessen ist, daß der Füllvorgang eine die Phasenlage der Teilströme beeinflussende Wirkung erzielt.

FIG. 1

FIG. 2

FIG. 3

# Europäisches Patentamt    EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 338 382 (INSTITUT FRANCAIS DU PETROLE)<br><br>  * Seite 4, Zeilen 12 bis 32; Figur 2 *<br><br>-- | 1 |
| A | US - A - 3 178 882 (MILLIGAN)<br><br>  * Spalte 8; Zeilen 7 bis 19; Figur 8 *<br><br>-- | |
| A | PATENTS ABSTRACTS OF JAPAN, Band 4, Nr. 57, 26. April 1980<br>Seite 159M9<br>& JP - A - 55-25505 (SATOU)<br><br>-- | |
| A | PATENTS ABSTRACTS OF JAPAN, Band 3, Nr. 42, 12. April 1979<br>Seite 45M55<br>& JP - A - 54-19007 (TSUBOUCHI)<br><br>-- | |
| A | CH - A - 211 354 (SCHWEIZERISCHE LOKOMOTIV & MASCHINENFABRIK) | |
| A | FR - A - 1 133 754 (LAFITTE) | |
| A | DE - C - 963 736 (K.H.D.) | |
| A | CH - A - 297 947 (LEIST) | |
| A | FR - A - 1 162 569 (REDON)<br><br>                 ./. | |

**KLASSIFIKATION DER ANMELDUNG (Int. Cl.³)**

F 02 B 37/00
        27/04

**RECHERCHIERTE SACHGEBIETE (Int. Cl.³)**

F 02 B
F 01 N

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 5-10-1981 | HAKHVERDI |

EPA form 1503.1   06.78

Europäisches
Patentamt

**EUROPÄISCHER RECHERCHENBERICHT**

| | **EINSCHLÄGIGE DOKUMENTE** | | **KLASSIFIKATION DER ANMELDUNG (Int.Cl. ³)** |
|---|---|---|---|
| Kategorie | Kennzeichnung des Dokuments mit Angabe, soweit erforderlich, der maßgeblichen Teile | betrifft Anspruch | |
| A | FR - A - 939 463 (GROIZILLIER) | | |
| E,A | EP - A - 0 034 765 (VEREINIGTE FLUGTECHNISCHE WERKE) | | |
| | ---------- | | |
| | | | **RECHERCHIERTE SACHGEBIETE (Int. Cl. ³)** |

EPA Form 1503.2   06.78